Europäisches Patentamt

European Patent Office

Office européen des brevets

(19)

(11) Publication number: **0 025 639**
**B1**

(12) **EUROPEAN PATENT SPECIFICATION**

(45) Date of publication of patent specification: **02.03.83**

(51) Int. Cl.³: **C 08 J 9/00, C 08 B 15/00**

(21) Application number: **80302630.1**

(22) Date of filing: **01.08.80**

(54) Process for preparing porous cellulose spherical particles.

(30) Priority: **03.08.79 JP 98631/79**

(43) Date of publication of application:
**25.03.81 Bulletin 81/12**

(45) Publication of the grant of the patent:
**02.03.83 Bulletin 83/9**

(84) Designated Contracting States:
**CH DE FR GB LI SE**

(56) References cited:
**CH - A - 470 420**
**DE - A - 2 523 893**
**DE - A - 2 717 965**

(73) Proprietor: **Motozato, Yoshiaki**
**1174-5, Hotakubohon-machi Kumamoto-shi**
**Kumamoto-ken (JP)**
(73) Proprietor: **Chisso Corporation**
**6-32, Nakanoshima 3-chome Kitaku**
**Osaka-shi Osaka-fu (JP)**

(72) Inventor: **Motozato, Yoshiaki**
**1174-5, Hotakubohon-machi**
**Kumamoto-shi Kumamoto-ken (JP)**
Inventor: **Ishibashi, Hiroaki**
**8-14, Jinnai 2-chome**
**Minamata-shi Kumamoto-ken (JP)**

(74) Representative: **Ruffles, Graham Keith et al,**
**MARKS & CLERK 57-60 Lincoln's Inn Fields**
**London WC2A 3LS (GB)**

Courier Press, Leamington Spa, England

Process for preparing porous cellulose spherical particles

This invention relates to a novel process for preparing porous cellulose spherical particles.

Gel filtration processes, that is processes for fractionating materials utilizing differences in molecular sizes, are known and are employed for purification of materials, desalting, etc. The gel fitration process can be used in an aqueous solution and in an organic solvent, are applicable for compounds having any molecular weight, and have been employed both on a laboratory scale and on an industrial scale. There are many materials conventionally used for gel filtrations, such as dextran gel cross-linked with epichlorohydrin, polyacrylamide gel, agarose gel, and cellulose gel (porous cellulose), etc.

Among these materials, cellulose gel has for example the following advantages:

(1) It has a higher physical strength and is hardly deformable, and thus a higher flow rate can be utilized in column chromatography.

(2) Adsorption of protein is small (Dextran gel, etc, may adsorb certain proteins.)

(3) It is stable against swelling and shrinkage.

(4) It is stable against organic solvents.

A process for preparing a gel filtering material based on cellulose has been described for instance in Japanese patent published specification no. 11237/1977. According to the published proces, cellulose is dissolved in an ammoniacal copper hydroxide solution or the like at a concentration of 1 to 12%, and then the cellulose solution is added dropwise to benzene containing an emulsifying agent and dispersed in it, the dispersion being introduced in to a regeneration bath to obtain fine spherical particles of cellulose. Cellulose gel filtering material obtained by this process is described as having a cellulose density of 2 to 25% (W/V) and pore sizes within the range from 2 to 2000 nm. In this respect, cellulose density [% (W/V)] is represented by the following equation:

$$\text{Cellulose density} = [W/(Vt = Vo)] \times 100,$$

wherein W means weight (g) of cellulose gel filtering material particles, Vt means total bed volume (ml), ie. volume of the part of the separating column filled by the filtering material particles, and Vo means void volume, ie. volume (ml) eluted from the column until dextran reaches the bottom of the bed when a solution of high molecular weight dextran impermeable to pores in the filtering material particles is flowed down from the top of the filled bed.

According to the above-mentioned process, it is difficult to prepare, with good reproducibility, products having desired cellulose densities or excluded critical molecular weight, particularly those having large cellulose densities and small excluded critical molecular weights. Further, since the cellulose densities of gel filtering material thus obtained is low, it has shortcomings, such as slight physical strength.

In Japanese patent laid-open specification no. 7759/1978, a preparation method is described in which a solution of cellulose triacetate dissolved in methylene chloride or other solvent is added dropwise into an aqueous medium with stirring to form suspended particles, then spherical particles of cellulose triacetate are formed by evaporating the solvent, and thereafter the particles are saponified to prepare cellulose spherical particles. According to the process, truly spherical cellulose particles can be formed but it is difficult to prepare, with good reproducibility, cellulose particles having a desired relatively small cellulose density or a desired relatively large excluded critical molecular weight.

An object of the invention is to provide a process which can be performed to prepare with good reproducibility, porous cellulose spherical particles having a desired density or excluded critical molecular weight as well as good physical strength. We have found that the above-mentioned object may be attained by using a solution of cellulose triacetate which also contains an aliphatic higher alcohol in the method described in the Japanese patent laid-open specification no. 7759/1978.

According to the present invention, porous cellulose spherical particles are prepared using a solution of cellulose triacetate in a mixed solvent comprising (i) a chlorinated hydrocarbon with a boiling point lower than that of an aqueous medium in which the solution is to be suspended and (ii) an aliphatic higher alcohol with 6 or more carbon atoms. The solution is suspended in an aqueous medium in the form of droplets, and the chlorinated hydrocarbon in the droplets is then evaporated off and thus removed, wherein spherical particles of cellulose triacetate containing the aliphatic high' alcohol are obtained. The particles are then saponified, and remaining aliphatic higher alcohol is removed.

The cellulose triacetate (hereinafter abbreviated as TAC) which is employed may generally be any of those obtained by acetating linter pulp, wood pulp, etc, with acetic acid or acetic anhydride. Cellulose triacetate with an acetylation degree of about 60% is preferred.

For chlorinated hydrocarbon, there may be employed eg. dichloromethane, chloroform, carbon tetrachloride, dichloroethane, trichloroethane, trichloroethylene, etc, alone or in admixture as 2 or more such compounds. The chlorinated hydrocarbons may be used as a main component in admixture with a small amount of other organic solvents such as methanol, ethanol, acetone, nitromethane, etc.

According to the present invention, the process described in Japanese patent laid-open specification no. 7759/1978 is improved in that use is made of an aliphatic higher alcohol with 6 or more carbon atoms, which necessarily has a higher boiling point than that of the chlorinated hydrocarbon. By saponifying TAC particles containing within the aliphatic higher alcohol with 6 or more carbon atoms, and, in accordance with necessity, washing or extracting with a hydrophilic organic solvent to remove the higher alcohol, porous cellulose particles are obtained. The degree of porosity of the cellulose particles may be changed by varying the content of the higher alcohol in the TAC particles. By the change in the porosity, various cellulose solid particles having different excluded critical molecular weights or densities may be obtained. Furthermore, by using the aliphatic higher alcohol with 6 or more carbon atoms, cellulose spherical particles with a desired value of excluded critical molecular weight or density can be prepared with good reproducibility. In the contrary case that the aliphatic higher alcohol is replaced by an alicyclic alcohol such as cyclohexanol or by an aliphatic alcohol such as amyl alcohol or butyl alcohol, etc, with 5 or less carbon atoms the reproducibility becomes bad, and it is difficult to control the excluded critical molecular weight or cellulose density by controlling the alcohol molecular weight or cellulose density by controlling the alcohol content in the TAC particle.

The aliphatic higher alcohol with 6 or more carbon atoms may be a straight or branched chain one, and those with 18 or less, particularly 12 or less, carbon atoms are preferable from the view point of their good solubility in the chlorinated hydrocarbon. Straight chain alcohols are preferable by reason of giving a relatively large excluded critical molecular weight.

The amount of the aliphatic higher alcohol used is preferably 15 or less times by weight, particularly 7 or less times by weight, relative to the amount of TAC. In the case that the amount of the higher alcohol used is larger, it sometimes becomes difficult to prepare spherical particles of TAC. The effect of adding the higher alcohol may usually be appreciated at an amount of 0.1 times by weight of TAC, with more than 0.3 times by weight being preferable.

In order to prepare the solution of TAC in the mixed solvent comprising a chlorinated hydrocarbon and an aliphatic higher alcohol with 6 or more carbon atoms, it is preferable first to dissolve TAC in the chlorinated hydrocarbon and then to add the higher alcohol. Alternatively, after dissolving the higher alcohol in the chlorinated hydrocarbon, TAC may be dissolved therein. The concentration of TAC in solution is preferably 0.1 to 15%, particularly 0.8 to 12%, relative to the total amount of the chlorinated hydrocarbon and TAC.

The aqueous medium used for suspending the TAC solution in droplet form may generally be an aqueous solution containing a dispersant such as gelatine, polyvinyl alcohol, carboxymethyl cellulose, etc, to which TAC solution is added dropwise and stirred. The concentration of the dispersant is preferable 2 to 10% relative to the aqueous solution.

Chlorinated hydrocarbon in the droplets thus prepared is then removed by evaporation from the suspension. The temperature during the evaporation is preferably higher than the freezing point of the aqueous medium and lower than the boiling point of the chlorinated hydrocarbon. The lower limit for the evaporation temperature is preferably 15°C or above, and on the other hand the upper limit is preferably 2°C or more below the boiling point of the chlorinated hydrocarbon.

Spherical particles of TAC containing the higher alcohol inside may be obtained in this way, and the spherical form can be maintained after the saponification, so that spherical cellulose particles are ultimately obtained.

The saponification in the process of this invention may be carried out by a conventional method, generally using 5 to 10% of aqueous caustic alkali solution at a temperature from room temperature (say 15 or 20°C) to 50°C with stirring. If necessary, in order to reduce the saponification time, saponification may be carried out after swelling the solid TAC spherical particles using eg. 40 to 90% of aqueous ethanol or methanol solution. In that case, TAC spherical particles may be introduced into a saponification bath after separation from the alcohol solution, or caustic alkali may be added to the alcohol solution containing TAC particles. As the caustic alkali, caustic soda or caustic potash is preferable, and the amount used is preferably from about 1 to 1.5 times of the theoretical amount required for saponifying the TAC. After the completion of the saponification, usually, by neutralization of cellulose spherical particles with an acid such as hydrochloric acid or acetic acid, etc, any subsequent treating procedures such as washing, etc may be carried out easily.

During the saponification, most of the higher alcohol may separate from the particles, but, for the purpose of complete separation of the higher alcohol, it is preferable to wash or extract the cellulose particles with a hydrophilic organic solvent such a methanol, ethanol, isopropanol or acetone or aqueous solutions thereof.

Porous cellulose spherical particles thus obtained according to the process of the present invention are useful not only for gel chromatography but also as raw material for ion exchange or for a carrier in affinity chromatography, etc. This invention should provide a great advantage in industry, as it can supply porous cellulose spherical particles with various cellulose density or excluded critical molecular weight required in these application by a simple and economical method.

In the following example, parts and % are based on weight unless otherwise indicated. Parts by volume to parts by weight are in the relationship of ml to g. The TAC used in each Example is cellulose triacetate KB 175 (TRADEMARK) made by the Celanese Company.

# 0 025 639

### Example 1

320 parts of TAC (acetylation degree: 60.6%) were dissolved in 4000 parts by volume of dichloromethane, 1600 parts by volume of n-octanol added, and the solution added dropwise to 6840 parts of 4% aqueous gelatin solution at 20°C with stirring. After the completion of the dropwise addition, stirring was continued for some time, the temperature of the suspension was thereafter raised to 38°C, and dichloromethane evaporated off and removed while stirring the suspension using a stirrer operating at 200 rpm. In this way truly spherical particles of TAC were obtained. The particles were filtered, washed with water and saponified. 3200 parts by volume of 75% by volume ethanol were added to the washed particles, and the mix stirred at 50°C for 30 minutes. Thereafter, 1820 parts of 10% caustic soda solution was added and the resulting system stirred at room temperature for 20 hours. Then, 96 parts of acetic acid were added to neutralize the system. After filtration and washing of the particles with water, any remaining n-octanol was removed by washing with methanol. After adequate washing again with water, porous cellulose spherical particles were obtained. The particles were classified and particles with a diameter of 100 to 200 $\mu$m were collected. The physical and chemical properties of the product thus obtained were examined by the following methods.

Swelling index:

Sufficient amount of water was added to the product, which was then allowed to stand for more than 6 hours. The volume of gel thus obtained was measured. Then, the gel was removed, dried and weighed. The swelling index is calculated by the formula:

$$\text{Swelling index} = \text{volume (ml)/weight (g)}$$

The swelling index of the product obtained in Example 1 was 8.0.

Cellulose density:

The product was used to fill a column of diameter of 2 cm, and the total bed volume Vt (ml) calculated from the inner diameter of the column and the height of the gel layer. Then, an aqueous solution of blue dextran having a molecular weight of 2 millions was flowed down the column and the eluted volume of displaced liquid determined to give the void volume Vo (ml). After washing with water the cellulose in the column, it was removed from the column, dried and weighed to obtain a dry weight W (g). The cellulose density is calculated from the data according to the following equation.

$$\text{Cellulose density (\%)} = [W/(Vt - Vo)] \times 100$$

For the product of Example 1, Vt was 240 ml, Vo was 129 ml and W was 30 g. Hence the cellulose density was 27%.

Excluded critical molecular weight:

The product was used to fill a column of diameter 4 mm, and aqueous solutions of polyethylene glycols or dextrans with various known molecular weight are poured on at the top. The elution volume of the aqueous solution until attainment of the elution point was measured by means of a differential refractometer (trade mark SHODEX; made by SHOWA DENKO K.K.). The elution volumes obtained were plotted against the molecular weights of the polyethylene glycol, etc, and the excluded critical molecular weight was obtained as the molecular weight at a curved point of the line.

The excluded critical molecular weight weight of the product of Example 1 was 52000.

The process of Example 1 was repeated using various amounts of n-octanol to give products having the properties shown on Table 1.

4

# 0 025 639

TABLE 1

| n-octanol (part by volume) | cellulose density (%) | excluded critical molecular weight |
|---|---|---|
| 2240 | 23 | 60000 |
|  | 23 | 61000 |
|  | 24 | 59000 |
| 1600 | 26 | 52000 |
|  | 27 | 50000 |
|  | 28 | 49000 |
| 960 | 34 | 27000 |
|  | 34 | 26000 |
|  | 35 | 26500 |
| 640 | 44 | 12000 |
|  | 45 | 11000 |
|  | 44 | 11500 |
| 320 | 58 | 4500 |
|  | 59 | 4000 |
|  | 60 | 3500 |
| 0 | 72 | 1100 |
|  | 71 | 1200 |
|  | 71 | 1000 |

Obviously from the results, the process of the invention may be carried out with very good reproducibility. The cellulose density and excluded critical molecular weight are confirmed to be well controlled.

Example 2

320 parts of TAC (acetylation degree: 60.8%) were dissolved in 5330 parts by volume of dichloromethane, and then various amounts of n-heptanol as shown in Table 2 were added. The resultant solution was added dropwise to 7200 parts of 0.6% aqueous polyvinyl alcohol solution. Thereafter, porous cellulose spherical particles were prepared through procedures similar to Example 1.

The properties of the products examined by the procedure similar to Example 1 (particle size 100 to 200 $\mu$m) are shown in Table 2.

5

# 0 025 639

TABLE 2

| n-heptanol (part by volume) | cellulose density (%) | excluded critical molecular weight) |
|---|---|---|
| 1600 | 30 | 40000 |
| | 31 | 42000 |
| 960 | 38 | 20000 |
| | 39 | 20000 |
| | 40 | 21000 |
| 640 | 46 | 10000 |
| | 46 | 10000 |
| | 47 | 11000 |
| 320 | 59 | 4000 |
| | 59 | 4000 |
| | 60 | 3900 |
| 160 | 65 | 2500 |
| | 65 | 2400 |

It will be appreciated that n-heptanol may be used with good reproducibility.

### Example 3

320 parts of TAC (acetylation degree: 60.8%) were dissolved in 8000 parts by volume of dichloromethane, and then 1600 parts by volume of 2-ethylhexanol added. The resultant solution was added dropwise to 10000 parts of 4% aqueous gelatin solution at 20°C. Thereafter, porous cellulose spherical particles were prepared by a method similar to Example 1. The swelling index of the product (particle diameter: 100 to 200 $\mu$m) was 7.5 ml/g, the cellulose density 43%, and the excluded critical molecular weight 15000.

### Example 4

Porous cellulose spherical particles were prepared according to a method similar to Example 1 except that 2240 parts by volume of n-hexanol was employed instead of the n-octanol. The swelling index of the product (particle diameter: 100 to 200 $\mu$m) was 7.1 ml/g, the cellulose density 41%, and the excluded critical molecular weight 18000.

### Example 5

Porous cellulose spherical particles were prepared according to a method similar to Example 1 except that 640 parts by volume of n-dodecanol was employed instead of the n-octanol. The swelling index of the product (particle diameter: 100 to 200 $\mu$m) was 4.6 ml/g, the cellulose density 38% and the excluded critical molecular weight 21000.

### Comparative example

A procedure is followed similar to Example 1 except that the alcohols as shown in Table 3 were employed instead of the n-octanol and at the amount indicated. The properties of the products obtained (particle diameter: 100 to 200$\mu$m) were as shown in Table 1.

6

## 0 025 639

TABLE 3

| solvent | amount added (part by volume) | cellulose density (%) | excluded critical molecular weight |
|---|---|---|---|
| isoamyl alcohol | 1920 | 43 | 10000 |
| | | 54 | 7000 |
| cyclohexanol | 1600 | 42 | 10000 |
| | | 54 | 7000 |
| | | 56 | 5500 |
| | 800 | 54 | 7000 |
| | | 61 | 3000 |

From these results, it is seen that when these alcohols are employed, the reproducibilities of the cellulose density and excluded critical molecular weight are poor.

**Claims**

1. A process for preparing porous cellulose spherical particles by suspending as droplets in an aqueous medium a solution of cellulose triacetate in a solvent comprising a chlorinated hydrocarbon with a boiling point lower than that of the aqueous medium, evaporating off the chlorinated hydrocarbon to give spherical particles of cellulose triacetate, and saponifying the cellulose triacetate spherical particles to give spherical particles of porous cellulose characterized in that the said solvent further comprises an aliphatic higher alcohol with 6 or more carbon atoms, that the aliphatic higher alcohol is present within the spherical particles of cellulose triacetate after evaporation of the chlorinated hydrocarbon, and that if necessary, remaining aliphatic higher alcohol is removed from the cellulose spherical particles after the saponification.

2. A process according to Claim 1, characterized in that the aliphatic higher alcohol has from 6 to 18 carbon atoms.

3. A process according to Claim 2, characterized in that the aliphatic higher alcohol has from 6 to 12 carbon atoms.

4. A process according to Claim 1, 2 or 3, characterized in that the aliphatic higher alcohol is used in an amount of 0.1 to 15 times the weight of the cellulose triacetate.

5. A process according to Claim 4, characterized in that the aliphatic higher alcohol is used in an amount of from 0.3 to 7 times the weight of the cellulose triacetate.

6. A process according to any preceding Claim, characterized in that the amount of cellulose triacetate in the solution is from 0.1 to 15% based on the total amount of the chlorinated hydrocarbon and the cellulose triacetate.

7. A process according to any preceding Claim, characterized in that the temperature for evaporating and removing the chlorinated hydrocarbon is between the freezing point of the aqueous medium and the boiling point of the chlorinated hydrocarbon.

8. A process according to Claim 7, characterized in that the evaporating temperature is 15°C or above.

9. A process according to Claim 7 or 8, characterized in that the evaporating temperature is 2°C or more below the boiling point of the chlorinated hydrocarbon.

10. A process according to any preceding Claim, characterized in that the aqueous medium contains a dispersant.

**Revendications**

1. Procédé pour la préparation de particules sphériques de cellulose poreuses par suspension sous forme de gouttelettes, dans un moyen aqueux, d'une solution de triacétate de cellulose dans un solvant comprenant un hydrocarbure chloré avec un point d'ébullition inférieur á celui du moyen aqueux; éloignement par évaporation de l'hydrocarbure chloré avec production de particules sphériques de triacétate de cellulose; et saponification des particules sphériques de triacétate de cellulose de façon à obtenir des particules sphériques de cellulose poreuse, ledit procédé étant caractérisé par le fait que ledit

7

solvant comprend en outre un alcool fort aliphatique avec six atomes de carbone ou davantage; par le fait que l'alcool aliphatique fort est présent dans les particules sphériques de triacétate de cellulose après l'évaporation de l'hydrocarbure chloré; et par le fait que si nécessaire, l'alcool aliphatique fort restant est éloigné des particules sphériques de cellulose après la saponification.

2. Procédé selon 1, caractérisé par le fait que l'alcool aliphatique fort a de 6 à 18 atomes de carbone.

3. Procédé selon 2, caractérisé par le fait que l'alcool aliphatique fort a de 6 à 12 atomes de carbone.

4. Procédé selon 1, 2 ou 3, caractérisé par le fait que l'alcool aliphatique fort est utilisé dans une quantité de 0,1 à 15 fois le poids du triacétate de cellulose.

5. Procédé selon 4, caractérisé par le fait que l'alcool aliphatique fort est utilisé dans une quantité de 0,3 à 7 fois le poids du triacétate de cellulose.

6. Procédé selon une quelconque des revendications précédentes, caractérisé par le fait que le quantité de triacétate de cellulose dans la solution est dans une proportion de 0,1 à 15% basée sur la quantité totale de l'hydrocarbure chloré et du triacétate de cellulose.

7. Procédé selon une quelconque des revendications précédentes, caractérisé par le fait que la température pour l'évaporation et l'éloignement de l'hydrocarbure chloré se situe entre le point de congélation du moyen aqueux et le point d'ébullition de l'hydrocarbure chloré.

8. Procédé selon 7, caractérisé par le fait que la température d'évaporation est de 15 degrés centrigrades ou au-dessus.

9. Procédé selon 7 ou 8, caractérisé par le fait que la température d'évaporation est inférieure de 2 degrés centrigrades ou davantage au point d'ébullition de l'hydrocarbure chloré.

10. Procédé selon une quelconque des revendications précédentes, caractérisé par le fait que le moyen aqueux contient un dispersant.

**Patentansprüche**

1. Verfahren zur Herstellung poröser sphärischer Zelluloseteilchen, bei dem eine Lösung aus Zellulosetriazetat in einem chlorierten Kohlenwasserstoff in ein wässriges Medium als Tröpfchen dispergiert wird, wobei der Siedepunkt des Kohlenwasserstoffs unter dem des wässrigen Mediums liegt, bei dem der Kohlenwasserstoff verdampft wird, um sphärishe Teilchen des Zellulosetriazetats zu erhalten, und bei dem die aus Zellulosetriazetat bestehenden sphärischen Teilchen verseift werden, um sphärische poröse Zelluloseteilchen zu erhalten, dadurch gekennzeichnet, daß das Lösungsmittel außerdem einen aliphatischen höheren Alkohol mit 6 oder mehr Kohleatomen enthält, daß dieser innerhalb der sphärischen Teilchen des Zellulosetriazetats nach dem Verdampfen des chlorierten Kohlenwasserstoffs vorhanden ist und daß gegebenenfalls der restliche aliphatische höhere Alkohol nach der Verseifung aus den sphärischen Zelluloseteilchen entfernt wird.

2. Verfahren nach Anspruch 1, dadurch gekennzeichnet, daß der aliphatische höhere Alkohol 6 bis 18 Kohleatome besitzt.

3. Verfahren nach Anspruch 2, dadurch gekennzeichnet, daß der aliphatische höhere Alkohol 6 bis 12 Kohleatome besitzt.

4. Verfahren nach Anspruch 1, 2 oder 3, dadurch gekennzeichnet, daß der aliphatische höhere Alkohol in einer Menge verwendet wird, die 0,1 bis 15 mal das Gewicht des Zellulosetriazetats ausmacht.

5. Verfahren nach Anspruch 4, dadurch gekennzeichnet, daß der aliphatische höhere Alkohol in einer Menge verwendet wird, die 0,3 bis 7 mal das Gewicht des Zellulosetriazetats ausmacht.

6. Verfahren nach einem der vorhergehenden Ansprüche 1 bis 5, dadurch gekennzeichnet, daß bezogen auf die Gesamtmenge an chloriertem Kohlenwasserstoff und an Zellulosetriazetat die Menge an Zellulosetriazetat in der Lösung 0,1 bis 15% ausmacht.

7. Verfahren nach einem der vorhergehenden Ansprüche 1 bis 6, dadurch gekennzeichnet, daß die Temperatur bei der Verdampfung und Entfernung des chlorierten Kohlenwasserstoffs zwischen dem Gefrierpunkt des wässrigen Mediums und dem Siedepunkt des chlorierten Kohlenwasserstoffs gewählt wird.

8. Verfahren nach Anspruch 7, dadurch gekennzeichnet, daß die Verdampfungstemperatur mindestens 15°C beträgt.

9. Verfahren nach Anspruch 7 oder 8, dadurch gekennzeichnet, daß die Verdampfungstemperatur den Siedepunkt des chlorierten Kohlenwasserstoffs um mindestens 2°C übersteigt.

10. Verfahren nach einem der vorhergehenden Ansprüche 1 bis 9, dadurch gekennzeichnet, daß das wässerige Medium ein Dispergiermittel enthält.